**Europäisches Patentamt**

**European Patent Office**

**Office européen des brevets**

(19)

(11) Veröffentlichungsnummer : **0 143 373 B1**

(12) **EUROPÄISCHE PATENTSCHRIFT**

(45) Veröffentlichungstag der Patentschrift :
15.06.88

(51) Int. Cl.⁴ : **H 04 N 9/64**

(21) Anmeldenummer : **84113446.3**

(22) Anmeldetag : **07.11.84**

(54) Integrierte Schaltung für den Farbdecoder eines PAL-Fernsehempfängers.

(30) Priorität : **23.11.83 DE 3342181**

(43) Veröffentlichungstag der Anmeldung :
**05.06.85 Patentblatt 85/23**

(45) Bekanntmachung des Hinweises auf die Patenterteilung : **15.06.88 Patentblatt 88/24**

(84) Benannte Vertragsstaaten :
**AT BE CH DE FR GB IT LI LU NL SE**

(56) Entgegenhaltungen :
GB-A- 2 089 167
10. JAHRESTAGUNG DER FKTG, v. 13-17. September
1982, Technischen Universität, München (DE), S. 375-
391, FKTG Mainz (DE), K. JUHNKE: "EIN Multistan-
dard-Farbdecoder für Farbfernsehempfänger mit nur
einer integrierten Schaltung"

(73) Patentinhaber : **Deutsche Thomson-Brandt GmbH**
**Hermann-Schwer-Strasse 3 Postfach 2060**
**D-7730 Villingen-Schwenningen (DE)**

(72) Erfinder : **Rufray, Jean-Claude**
**Hans-Thoma-Strasse 6**
**D-7730 VS-Überauchen (DE)**
Erfinder : **Pery, Antoine**
**Freiburgerstrasse 3/1**
**D-7730 Villingen-Schwenningen (DE)**

EP 0 143 373 B1

## Beschreibung

Die Erfindung betrifft eine integrierte Schaltung für den Farbdekoder eines PAL-Farbfernsehempfängers mit einer Addierstufe und einer Subtrahierstufe für die Farbträger aus zwei zeitlich aufeinanderfolgenden Zeilen und mit einem zu Demodulation des Farbträgers dienenden Oszillator.

Es ist bekannt, die für die Dekodierung des Farbträgers und die Erzeugung der Farbdifferenzsignale notwendigen Bauteile, insbesondere Farbträgerverstärker, Synchrondemodula-toren, Bezugsträgeroszillatoren, Matrixschaltungen, Verstärker für die Farbdifferenzsignale, den zeilenfrequenten PAL- und/oder SECAM-Schalter und PLL-Schaltungen in einem integrierten Schaltkreis, einem sogenannten Chroma-IC, zusammenzufassen. Ein solcher integrierter Schaltkreis wird mit dem modulierten Farbträger und dem Sandcastle-Impuls gespeist und liefert an seinen Ausgängen die beiden Farbdifferenzsignale (B-Y) und (R-Y). Eine derartige integrierte Schaltung vom Typ TDA 3560 für einen PAL-Decoder ist z. B. beschrieben in « Funk-Technik », 1979, Nr. 9, Seite T 445-T 448.

Es ist auch eine integrierte Schaltung für einen PAL-Farbfernsehempfänger bekannt (Tagungsband der 10. Jahrestagung der FKTG in München vom 13.-17 September 1982, Seiten 375-391), die auch die Addierstufe und die Subtrahierstufe für die PAL-Farbträger aus zwei zeitlich aufeinanderfolgenden Zeilen, die sogenannte PAL-Matrix enthält. Die Zeilenverzögerungsleitung zur Gewinnung des Farbträgers der zeitlich vorangehenden Zeile ist dabei als externes Bauteil an Anschlußklemmen der integrierten Schaltung angeschlossen. Für eine einwandfreie Funktion des sogenannten PAL-Decoders ist für die Farbträger an den Eingängen der Addierstufe und der Subtrahierstufe ein besonders genauer Amplituden- und Phasenabgleich erforderlich, weil in den genannten Stufen eine vektorielle Addition und Subtraktion der Farbträger erfolgt. Für diesen Abgleich sind daher extern zur integrierten Schaltung für den Phasenabgleich eine einstellbare Spule und für den Amplitudenabgleich ein einstellbarer Widerstand vorgesehen. Außerdem ist an die integrierte Schaltung als Referenzelement für die Synchronisierung des in der Schaltung enthaltenen Bezugsträgeroszillators extern ein Quarz als Frequenznormal angeschlossen. Derartige externe Bauteile sind relativ teure Bauteile. Die Spule und der Widerstand müssen außerdem bei der Herstellung des Farbfernsehempfängers für jeden Empfänger einzeln manuell abgeglichen werden, insbesondere wegen Toleranzen in den Werten der externen Zeilenverzögerungsleitung.

Der Erfindung liegt die Aufgabe zugrunde, eine integrierte Schaltung der beschriebenen Art so auszubilden, daß der Aufwand an externen Bauteilen und insbesondere der manuelle Aufwand für den Abgleich externer Bauteile verringert wird.

Diese Aufgabe wird durch die im Anspruch 1 beschriebene Erfindung gelöst. Vorteilhafte Weiterbildungen der Erfindung sind in den abhängigen Ansprüchen beschrieben.

Die Erfindung beruht auf folgender Erkenntnis : Die bisher extern benötigten Bauteile zur Einstellung bestimmter Parameter innerhalb der integrierten Schaltung können durch eine interne Regelschaltung ersetzt werden, die selbsttätig den jeweils notwendigen Parameter einregelt. Das hat mehrere Vorteile. Zunächst werden weniger externe, einstellbare Bauteile oder Synchronisier-Bauteile benötigt. So kann z. B. eine bisher einstellbare Spule durch eine Spule mit fester Induktivität oder ein zur Amplitudeneinstellung dienendes Potentiometer durch einen Festwiderstand ersetzt werden, wodurch eine Einsparung erzielt wird. Auch der bisher benötigte externe, auf die Farbträgerfrequenz abgestimmte Quarz für die Synchronisierung der Bezugsträgeroszillatoren kann entfallen. Der Wegfall der einstellbaren externen Bauteile bringt außerdem bei dem Einbau der integrierten Schaltung, also der Herstellung des Farbfernsehempfängers, eine Einsparung an Arbeitsaufwand, weil der bisher notwendige manuelle Abgleich für mehrere Parameter entfällt. Ein weiterer Vorteil besteht darin, daß die jeweils einzuhaltenden Betriebsbedingungen auch über einen längeren Zeitraum von mehreren Jahren erhalten bleiben. Wenn die jeweilige Betriebsweise z. B. mit einem externen Trimmer eingestellt ist und im Laufe der Jahre durch Alterung von Bauteilen Abweichungen auftreten, so ist im Regelfall ein manueller Nachabgleich notwendig. Bei der intern vorgesehenen Regelschaltung ist dieser Nachabgleich nicht erforderlich, weil die Regelschaltung die jeweilige Betriebsart immer wieder selbsttätig einregelt. Die intern vorgesehenen Regelschaltungen stellen an sich einen größeren Schaltungsaufwand dar als die externen einstellbaren Bauteile. Ein Mehraufwand an einzelnen Bauteilen oder Stufen in einer integrierten Schaltung erhöht die Kosten einer solchen Schaltung nur unwesentlich. Der Vorteil der Einsparung der externen Bauteile für den Abgleich ist wesentlich größer als der Nachteil des geringfügigen Mehraufwandes in der integrierten Schaltung.

Ein Ausführungsbeispiel der Erfindung wird am Beispiel einer integrierten Schaltung für einen Multistandard-Farbdecoder für NTSC-PAL und SECAM-Betrieb anhand der Zeichnung erläutert. Darin zeigen

Fig. 1 ein Blockschaltbild der integrierten Schaltung mit den noch benötigten Bauteilen,

Fig. 2 im Detail die in Fig. 1 dargestellten digitale Frequenz-Regelschaltung und

Fig. 3 eine Kurve zur Erläuterung der Wirkungsweise der Regelschaltung nach Fig. 2.

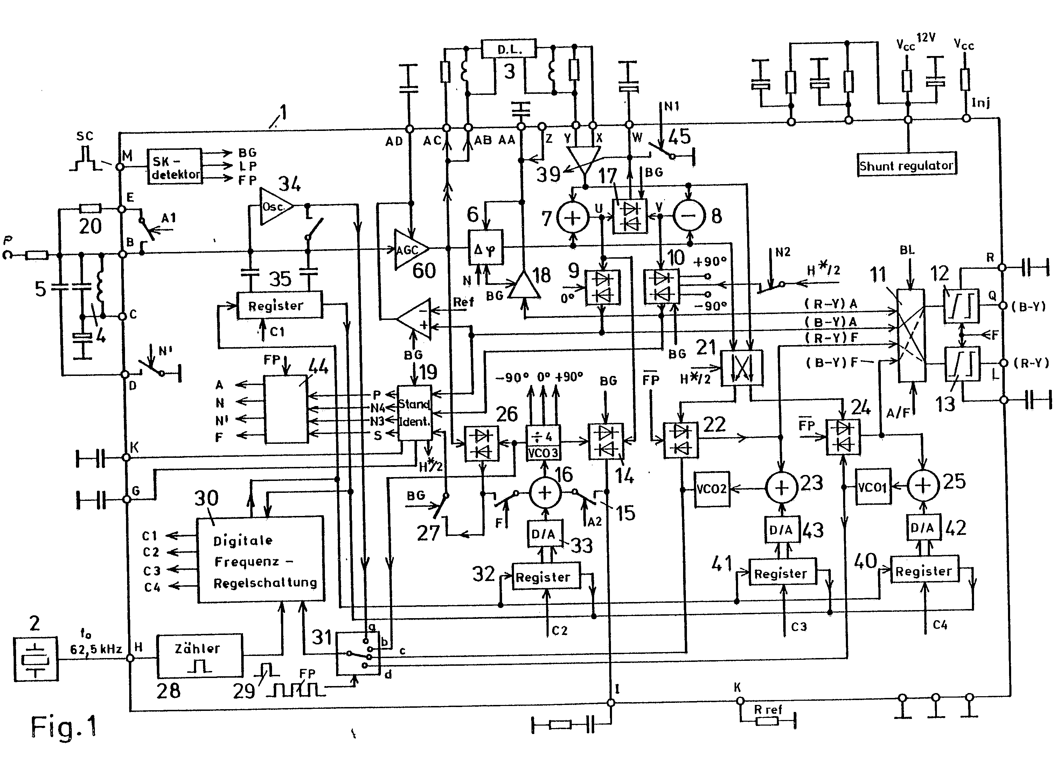

Die in Figur 1 dargestellte integrierte Schaltung 1 wird an der Klemme M mit dem Sandcastle-Impuls SC und an den Klemmen B und C mit dem modulierten Farbträger F gespeist. An die Klemmen K und G sind Kondensatoren zur Erzielung der notwendigen Zeitkonstanten der internen Identifikationsschaltung 19 angeschlossen. An die Klemme H ist ein Quarz-Oszillator 2 angeschlossen, der eine stabilisierte Frequenz von 62,5 kHz liefert. Dieser Quarz-Oszillator entspricht nicht dem sonst notwendigen Quarz mit der Farbträgerfrequenz von 4,43 MHz für PAL oder 3,58 MHz für NTSC. Es handelt sich dabei um einen ohnehin an einer anderen Stelle des Fernsehempfängers vorhandenen Quarz, der z. B. in einem Synthesizer oder einem Tuner enthalten ist und dessen Frequenz nicht mit der Frequenz des Farbträgers übereinstimmen muß. An die Klemmen AC und AB ist der Eingang und an die Klemmen Y und X der Ausgang der für PAL- und SECAM-Betrieb notwendigen Zeilenverzögerungsleitung 3 angeschlossen. An den Klemmen Q, P liefert der Schaltkreis 1 die Farbdifferenzsignale (B-Y) und (R-Y) für die Bildwiedergabe.

Die in Fig. 1 verwendeten Symbole haben folgende Bedeutung :

P Ausgang bei Identifikation eines PAL-Signals durch Erkennung des in der Phase zeilenfrequent umgeschalteten PAL-Farbsynchronsignals

N3 Ausgang bei Identifikation eines NTSC-Signals mit der NTSC-Farbträgerfrequenz von 3,58 MHz

N4 Ausgang bei Identifikation eines NTSC-Signals mit einer Farbträgerfrequenz von 4,43 MHz, z. B. bei NTSC-Videorecordern mit PAL-Farbträgerfrequenz

S Ausgang bei Identifikation eines SECAM-Signals durch Auswertung der typischen SECAM-Farbträgerfrequenzen

A Betrieb der Schaltung für Signale mit Amplitudenmodulation, also NTSC und PAL. Die mit « A » bezeichneten Schalter werden bei Betrieb mit Amplitudenmodulation aus der dargestellten Stellung heraus betätigt.

F Betrieb der Schaltung für Signale mit Frequenzmodulation, also SECAM. Die mit « F » bezeichneten Schalter werden bei Betrieb mit Frequenzmodulation aus der dargestellten Stellung heraus betätigt.

N Betrieb für ein NTSC-Signal. Die mit « N » bezeichneten Schalter werden bei NTSC-Betrieb aus der dargestellten Stellung heraus betätigt.

N' Betrieb für NTSC mit einer Farbträgerfrequenz von 3,58 MHz. Der mit « N' » bezeichnete Schalter wird bei NTSC mit 3,58 MHz aus der dargestellten Stellung heraus betätigt.

BG (burst gate) Auftastung des Farbsynchronsignals. An den mit « BG » bezeichneten Stellen erfolgt eine Durchschaltung des Signalweges nur während der Dauer des Farbsynchronsignals. Die mit « BG » bezeichneten Schalter sind während der Dauer des Farbsynchronsignals aus der dargestellten Stellung heraus betätigt.

LP (line-pulse) Zeilenfrequenter Impuls, der aus dem Sandcastle-Impuls gewonnen wird.

FP (frame- Vertikalfrequenter Impuls mit 50 Hz, der aus dem Sandpulse) castle-Impuls gewonnen wird.

H/2* Halbzeilenfrequente Schaltspannung mit richtiger Schaltphase für den PAL- und SECAM-Schalter.

Im folgenden werden verschiedene Betriebsarten für NTSC, PAL und SECAM und die einzelnen internen Regel- und Synchronisierfunktionen nacheinander beschrieben.

## NTSC-Betrieb

Der Schalter N' wird geschlossen, so daß das Bandfilter 4 zwischen den Eingangsklemmen B und C durch die Zuschaltung des Kondensators 5 auf die niedrigere Farbträgerfrequenz von 3,58 MHz umgeschaltet wird. Der NTSC-Farbträger F gelangt von der Klemme B über die zur automatischen Regelung der Farbverstärkung dienende Stufe 60 (AGC) und den steuerbaren Phasendreher 6 auf die Addierstufe 7 und die Subtrahierstufe 8. Der gleichfalls betätigte Schalter N1 schaltet den Verstärker 39 ab, so daß die oberen Eingänge der Stufen 7, 8 kein Signal erhalten. Der Farbträger F erscheint also unverändert an den beiden Eingängen der Synchrondemodulatoren 9, 10. Der Synchrondemodulator 9 wird von dem Bezugsträger-Oszillator VCO3 mit einem Bezugsträger mit der konstanten Phase 0° gespeist und liefert über den Umschalter 11 (ausgezogene Verbindungen) und die ausgeschaltete Deemphasisstufe 12 an der Klemme Q das Farbdifferenzsignal (B-Y). Der Synchrondemodulator 10 bekommt von dem Oszillator VCO3 einen Bezugsträger mit der konstanten Phase + 90° und liefert über den Umschalter 11 und die ausgeschaltete Deemphasisstufe 13 an der Klemme L das Farbdifferenzsignal (R-Y). Der Schalter N2 ist geöffnet. Dadurch gelangt die halbzeilenfrequente Schaltspannung H/2* nicht auf den Synchrondemodulator 10, so daß die dort angedeutete, nur bei PAL-Betrieb notwendige Phasenumschaltung des Bezugsträgers zwischen + 90° und — 90° nicht stattfindet. In der Phasenvergleichsstufe 14, die durch den Auftastimpuls BG nur während der Dauer des Farbsynchronsignals wirksam gesteuert ist, werden das Farbsynchronsignal von Ausgang der Addierstufe 7 und die Ausgangsspannung des Bezugsträgeroszillators VCO3 verglichen. Die dadurch gewonnene Regelspannung regelt über den geschlossenen Schalter 15 und die Addierstufe 16 den Bezugsträger-Oszillator CVO3, so daß dieser mit der Farbträgerfrequenz von 3,58 MHz schwingt. Die weitere Synchronisierung durch den Quarz-Oszillator 2 wird später unter dem Kapitel « Synchronisierung der Oszillatoren » beschrieben. Durch die Sperrung des Verstärkers 39 ist somit die bei NTSC-Betrieb nicht notwendige Zeilenverzögerungsleitung 3 unwirksam, und die oberen Eingänge der Stufen 7 und 8 erhalten kein Signal.

## PAL-Decodierung

Der Schalter N1 ist geöffnet und der Verstärker 39 wirksam. Der unverzögerte Farbträger vom Phasendreher 6 und der um eine Zeilendauer verzögerte Farbträger von dem steuerbaren Verstärker 39 gelangen auf die als PAL-Matrix arbeitenden Stufen 7, 8 und werden dort in die beiden farbträgerfrequenten Signale F (B-Y) und ± F (R-Y) aufgespalten. Diese werden in den Synchrondemodulatoren 9, 10 demoduliert, so daß die Farbdifferenzsignale (B-Y) und (R-Y) an den Klemmen Q und L stehen. Durch den geschlossenen Schalter N2 gelangt die halbzeilenfrequente Schaltspannung H/2* auf den Synchrondemodulator 10 und bewirkt dort die notwendige zeilenfrequente Phasenumschaltung des zur Demodulation dienenden, vom Oszillator VCO3 kommenden Bezugsträer zwischen + 90° und — 90°.

PAL-Amplitudenabgleich

Für die einwandfreie Funktion der PAL-Matrix 7, 8 müssen die Farbträger jeweils an den beiden Eingängen dieser Stufen gleiche Amplitude haben. Zu diesem Zweck ist bei bekannten Schaltungen in der Regel am Ausgang der Verzögerungsleitung 3 ein Potentiometer vorgesehen. Die zur Einstellung des Amplitudenabgleichs vorgesehene interne Regelschaltung arbeitet folgendermaßen : Die farbträgerfrequenten Ausgangssignale der Stufen 7, 8 werden der durch den Auftastimpuls BG nur während der Dauer des Farbsynchronsignals wirksamen Phasenvergleichsstufe 17 zugeführt.

Bei richtigem Amplitudenabgleich haben die Farbsynchronsignalkomponenten an den Ausgängen U, V der Stufen 7, 8 eine Phasendrehung von 90° zueinander, so daß die Phasenvergleichsstufe 17 keine Regelspannung abgibt. Bei einem Amplitudenunterschied ändert sich dieser Winkel. Er wird bei einer Amplitudenabweichung in der einen Richtung größer und bei einer Amplitudenabweichung in der anderen Richtung kleiner. Dadurch wird die Stellgröße am Ausgang der Phasenvergleichsstufe 17 größer oder kleiner und regelt die Verstärkung des Verstärkers 39 in dem Sinne, daß die Farbsynchronsignalkomponenten an den Eingängen der Phasenvergleichsstufe 17 um 90° gegeneinander in der Phase verschoben sind. Dann ist sichergestellt, daß die Farbträger an den Eingängen der Stufen 7, 8 gleiche Amplitude haben. Ein externer Einsteller zur Einstellung dieser Amplitudenbedingung wird somit nicht mehr benötigt.

PAL-Phasenabgleich

Für die einwandfreie Wirkungsweise der PAL-Matrix mit den Stufen 7, 8 muß die Grundphase, d. h. die Phase bei einem Farbträger mit der (B-Y)-Achse, an den beiden Eingängen dieser Stufen übereinstimmen. Zu diesem Zweck ist bei bekannten Schaltungen die Induktivität am Ausgang der Verzögerungsleitung 3 einstellbar. Bei richtiger Phaseneinstellung hat die Farbsynchronsignalkomponente am Ausgang V der Subtrahierstufe 8 von Zeile zu Zeile abwechselnd die Phase + 90° der Achse (R-Y) und die Phase — 90° der Achse - (R-Y). Diese Farbsignalsynchronkomponente gelangt an den Eingang des Synchrondemodulators 10. Durch den Impuls BG ist die zeilenfrequente Phasenumschaltung des (R-Y)-Bezugsträgers zwischen + 90° und — 90° während der Zeilenrücklaufzeit aufgehoben, so daß die Farbsynchrosignalkomponente ständig an der Achse + 90° demoduliert wird. Durch die Phasenumschaltung der Farbsynchronsignalkomponente am Ausgang V zwischen + 90° und — 90° entstehen am Ausgang des Synchrondemodulators 10 jeweils während der Dauer dieser Farbsynchronsignalkomponente Impulse gleicher Amplitude und mit von Zeile zu Zeile abwechselnder Polarität. Mit dem Tor 18, das durch den Tastimpuls BG nur während der Dauer des Farbsynchronsignals durchlässig gesteuert ist, werden diese Impulse zeitselektiv ausgewertet. Durch Siebung der Impulse ergibt sich wegen der gleichen Amplitude und der abwechselnd unterschiedlichen Polarität am Steuereingang des Phasendrehers 6 eine Regelspannung mit dem Wert null. Diese Regelspannung ändert die richtige Phasendrehung des Phasendrehers 6 somit nicht. Es sei angenommen, daß durch einen falschen Phasenfehlabgleich der Winkel zwischen den Farbsynchronsignalen mit der Sollphase 135° und der Sollphase 225° an den Eingängen der Subtrahierstufe 8 sich ändert. Dann haben die am Ausgang des Synchrondemodulators 10 aus der Farbsynchronsignalkomponente gewonnenen Impulse von Zeile zu Zeile wieder eine unterschiedliche Polarität. Je nach Richtung der Phasenabweichung wird die Amplitude der positiv gerichteten Impulse jedoch größer und der negativ gerichteten Impulse kleiner oder umgekehrt. Nach entsprechender Siebung entsteht dadurch am Steuereingang des Phasendrehers 6 eine positive oder negative Regelspannung. Diese ändert die Phasendrehung des Phasendrehers 6 in dem Sinne, daß die Farbsynchronsignale an den Eingängen der Subtrahierstufe 8 und damit auch der Addierstufe 7 wieder die richtige Sollphasen von 135° und 235° haben. Dadurch ist sichergestellt, daß auch die modulierten Farbträger während der Zeilenhinlaufzeit an den Eingängen der Stufen 7, 8 die richtige Phase zueinander haben.

PAL-Schaltphase

Wie bereits unter dem Kapitel « PAL-Phasenabgleich » beschrieben, entstehen am Ausgang des Synchrondemodulators 10 Impulse mit von Zeile zu Zeile umgeschalteter Polarität. Da diese Impulse aus dem Farbsynchronsignal gewonnen sind, enthalten sie eine Information für die richtige, vom Farbsynchronsignal vorgeschriebene Schaltphase des PAL-Umschalters. Diese Impulse gelangen auf die Identifikationsschaltung 19, so daß am Ausgang dieser Schaltung 19 immer die in der Schaltphase richtige Schaltspannung H/2* steht. Die genannte Schaltung zur Korrektur der PAL-Schaltphase ist näher beschrieben in der französischen Patentanmeldung Nr. 8220772. Die Identifikationsschaltung 19 identifiziert außerdem die Norm des jeweils empfangenen Signales für die Normenumschaltung aus der zeilenfrequenten Umschaltung der Impulsfolge vom Ausgang des Synchrondemodulators 10. Diese Funktion wird später unter dem Abschnitt « Normenumschaltung » näher beschrieben.

## SECAM-Decodierung

Mit dem Schalter an der Klemme E, der nur bei Signalen mit Amplitudenmodulation geschlossen ist, wird der Widerstand 20 abgeschaltet. Dadurch ist das Bandfilter 4 weniger gedämpft und bewirkt die bei SECAM-Betrieb notwendige Entzerrung des Farbträgers durch eine innerhalb der Bandbreite des Farbträgers glockenförmige Durchlaßkurve (cloche). Bei Amplitudenmodulation (PAL, NTSC) ist die bei SECAM-Betrieb notwendige glockenförmige Durchlaßkurve zur Entzerrung des Farbträgers nicht erwünscht. Deshalb ist bei diesen Betriebsarten das Bandfilter 4 mit dem Widerstand 20 gedämpft, so daß über die Bandbreite des modulierten Farbträgers die Durchlaßkurve des Bandfilters 4 nicht nennenswert abfällt. Der unverzögerte SECAM-Farbträger vom Ausgang des Phasendrehers 6 und der um eine Zeilendauer verzögerte SECAM-Farbträger vom Ausgang des Verstärkers 39 gelangen auf den zeilenfrequent betätigten SECAM-Kreuzschalter 21, der durch die halbzeilenfrequente Schaltspannung H/2* gesteuert wird und an seinen beiden Ausgängen getrennt die beiden zeilensequentiell übertragenen SECAM-Farbträger mit den unterschiedlichen Frequenzen von 4,406 MHz und 4,250 MHz liefert. Diese Farbträger werden zwei getrennten FM-Demodulatoren zugeführt. Diese FM-Demodulatoren sind als PLL-FM-Demodulatoren ausgebildet und enthalten die beiden Oszillatoren VCO1 und VCO2. Über die PLL-Regelschleife mit der Phasenvergleichsstufe 22 und der Addierstufe 23 wird die Frequenz des Oszillators VCO2 immer auf die Frequenz des zugeführten modulierten Farbträgers geregelt. Das bedeutet, daß die Ausgangsspannung der Phasenvergleichsstufe 22 der Frequenz des Farbträgers proportional ist und somit das Farbdifferenzsignal (R-Y) darstellt. Dieses gelangt über den Umschalter 11 (gestrichelte Verbindung) und die durch F eingeschaltete Deemphasisstufe 13 auf die Klemme L. Entsprechend arbeiten die Phasenvergleichsstufe 24, die Addierstufe 25 und der Oszillator VCO1 für das Farbdifferenzsignal (B-Y). Dieses gelangt über den Umschalter 11 und die eingeschaltete Deemphasisstufe 12 auf die Klemme Q. Eine zusätzliche Synchronisierung der Oszillatoren VCO1 und VCO2 durch den Quarzoszillator 2 wird unter dem Kapitel « Synchronisierung der Oszillatoren » beschrieben. Die Phasenvergleichsstufen 22, 24 sind durch den vertikalfrequenten Impuls Fp unwirksam gesteuert. Diese Zeit wird benutzt, um die an die Ausgänge der Register 40, 41 angeschlossenen D/A-Wandler 42, 43 abzugleichen.

## Amplitudenregelung bei SECAM

Der für PAL-Betrieb beschriebene Amplitudenabgleich mit dem Verstärker 39 ist auch bei SECAM-Betrieb wirksam. Bei SECAM-Betrieb gelangen die SECAM-Farbträger ebenfalls auf die PAL-Matrix 7, 8. Diese wird an sich für die Farbsignalerzeugung nicht ausgenutzt. Durch Multiplikation der SECAM-Farbträger in der nur während der Dauer des Farbsynchronsignales wirksam geschalteten Phasenvergleichsstufe 17 entsteht ebenfalls am Steuereingang des Verstärkers 39 eine Regelspannung. Diese steuert die Verstärkung des Verstärkers 39 in dem Sinne, daß die SECAM-Farbträger am Ausgang des Phasendrehers 6 und am Ausgang des Verstärkers 39, also an den Eingängen des SECAM-Schalters 21, gleiche Amplituden haben.

## SECAM-Schaltphase

Der SECAM-Farbträger mit von Zeile zu Zeile umgeschalteter Frequenz gelangt auf die Phasenvergleichsstufe 26, die zusammen mit dem Oszillator VCO3 und der Addierstufe 16 eine PLL-Schaltung bildet. Dadurch wird die Frequenz des Oszillators VCO3 von Zeile zu Zeile abwechselnd auf die beiden unterschiedlichen SECAM-Farbträgerfrequenzen geregelt. Diese Regelung erfolgt auf die gleiche Weise wie die der Oszillatoren VCO1 und VCO2 für die SECAM-Decodierung. Wenn der Oszillator VCO3 auf den Mittelwert 4,328 MHz der beiden unterschiedlichen Farbträgerfrequenzen abgeglichen ist, hat die Regelspannung am Ausgang der Phasenvergleichsstufe 26 von Zeile zu Zeile unterschiedliche Polarität. Mit dem Schalter 27, der durch den Impuls BG während der Dauer der unmodulierten SECAM-Farbträgerschwingungen zu Beginn jeder Zeile geschlossen ist, wird die Regelspannung während dieser Farbträgerschwingungen ausgewertet. Dadurch wird am Eingang der Identifikationsschaltung 19 ebenfalls eine Spannung mit von Zeile zu Zeile unterschiedlicher Polarität gewonnen, die der Impulsfolge vom Synchrondemodulator 10 bei PAL-Betrieb gleichzusetzen ist. Die beiden unteren rechten Eingänge der Identifikationsschaltung 19 erhalten somit bei PAL-Betrieb und bei SECAM-Betrieb praktisch die gleiche Impulsfolge. Bei SECAM-Betrieb wird mit der Impulsfolge vom Ausgang der Phasenvergleichsstufe 26 in der Identifikationsschaltung 19 somit ebenfalls die richtige Schaltphase der Schaltspannung H/2* für den Umschalter 21 sichergestellt.

## Synchronisierung der Oszillatoren

Die vom Quarz-Oszillator 2 gelieferte Spannung mit der konstanten Frequenz fo von 62,5 kHz wird über die Klemme H der Schaltung 28 zugeführt, die einen Zähler und einen Impulserzeuger enthält. Die Stufe 28 erzeugt durch Zählen der Perioden der Referenzfrequenzspannung einen Meßimpuls 29 mit einer definierten Dauer von etwa 850 us bis 1 ms. Dieser Meßimpuls 29 dient in der digitalen Frequenz-Regelschaltung 30 als Zeitfenster. Während dieser Zeit erfolgt in der Schaltung 30 eine Zählung der Perioden der zugeführten Schwingungen und somit eine Frequenzmessung. In der Stellung b des mit vier Eingängen a, b, c, d versehenen Umschalters 31 gelangt der Bezugsträger vom Oszillator VCO3 auf den Eingang der Regelschaltung 30. Die Frequenz des Bezugsträgers wird in der Regelschaltung 30 gemessen und mit dem ebenfalls aus der Referenzfrequenzspannung gewonnenen Sollwert verglichen. Bei Abweichung gelangt ein digitales Signal auf das Register 32. Aus dessen Ausgangsspannung wird in dem D/A-Wandler 33 eine analoge Regelspannung gewonnen, die in der Addierstufe 16 der Regelspannung von der Phasenvergleichsstufe 14 hinzugefügt wird. Durch die analoge Regelspannung wird jeweils nach einer Meßzeit die Frequenz des Oszillators VCO3 solange geändert, bis sie den Sollwert aufweist. Der Oszillator VCO3 wird also von der Frequenz-Regelschaltung 30 abgeglichen und zusätzlich vom Farbsynchronsignal durch analoge Regelspannungen auf die richtige Frequenz geregelt. Dies ist aus folgendem Grunde erforderlich : Eine genaue Frequenz und Phasenregelung des Oszillators VCO3 durch das Farbsynchronsignal allein ist nicht möglich. Das Farbsynchronsignal hat nicht nur die singuläre PAL-Farbträgerfrequenz von 4,43361875 MHz, sondern Spektrallinien jeweils im Abstand der halben Zeilenfrequenz. Der Oszillator kann also auch auf eine Spektrallinie einrasten, die um ein ganzzahliges Vielfaches der Zeilenfrequenz von der richtigen Frequenz abweicht. Dann wäre eine einwandfreie Synchrondemodulation nicht mehr möglich. Bei der bekannten Verwendung eines Quarz ist dies nicht möglich, weil der Oszillator wegen der extrem geringen Bandbreite eines Quarz von etwa 100-200 Hz nicht auf eine Seitenspektrallinie einrasten kann. Um den Oszillator VCO3 nunmehr auf die richtige Frequenz zu synchronisieren, erfolgt der zusätzliche Abgleich mit der digitalen Frequenz-Regelschaltung 30, die ihrerseits durch die quarzstabilisierte Spannung an der Klemme H gesteuert wird.

Auf gleiche Weise werden die Oszillatoren VCO1 und VCO2 über die Register 40, 41 und die D/A-Wandler 42, 43 auf die richtige Frequenz abgeglichen. Die analoge Regelspannung der D/A-Wandler stellt also die richtige Ruhefrequenz der Oszillatoren VCO1 und VCO2, d. h. die Ruhefrequenz der modulierten SECAM-Farbträger ein, und die analoge Regelspannung von den Ausgängen der Phasenvergleichsstufen 22, 24 ändert diese Frequenz entsprechend der Frequenzmodulation der SECAM-Farbträger.

Die Oszillatoren VCO1, VCO2 und VCO3 werden somit bei den einzelnen Betriebsarten auf folgenden Frequenzen abgeglichen :

SECAM-Betrieb

VCO1 mit 4,250 MHz für die Übertragung des Signales (B-Y)

VCO2 mit 5,406 MHz für die Übertragung des Signales (R-Y)

VCO3 auf die Mittenfrequenz (4,250 + 4,406)/2 = 4,328 MHz.

PAL-Betrieb

VCO3 mit 4,433 MHz

NTSC-Betrieb N4 :

VCO3 mit 4,433 MHz

NTSC-Betrieb N3 :

VCO3 mit 3,58 MHz

Die Messung der Frequenzen der Oszillatoren VCO1 und VCO2 und VCO3 erfolgt mit dem Schalter 31 sequentiell von Halbbild zu Halbbild jeweils währender Vertikalaustastzeit.

Der Schalter 31 wird also durch den Impuls FP zu Beginn jedes Halbbildes weitergeschaltet. In Stellung b wird die Frequenz des Oszillators VCO3, in Stellung c die Frequenz des Oszillators VCO2 und in Stellung d die Frequenz des Oszillators VCO1 in der Regelschaltung 30 gemessen und die Abweichung gegenüber dem Sollwert in eine digitale Stellgröße für die Register umgewandelt.

Bandfilterabstimmung

Das Bandfilter 4 an den Klemmen B, C ist jeweils auf die Frequenz des Farbträgers abgestimmt. Diese Abstimmung muß besonders beim SECAM-Farbträger genau eingehalten werden, weil die gebildete Durchlaßkurve die Deemphasis für den modulierten SECAM-Farbträger bewirkt. Der interne Oszillator 34 ist so an das Bandfilter 4 angekoppelt, daß seine Schwingfrequenz von der Resonanzfrequenz des Bandfilters 4 abhängt. Die Ausgangsspannung des Oszillators 34 gelangt über den Umschalter 31 in seine Stellung a für die Dauer eines Halbbildes ebenfalls auf die Regelschaltung 30 und wird dort ausgewertet. Bei Abweichung der Resonanzfrequenz ändert sich die Schwingfrequenz des Oszillators 34. In der Regelschaltung 30 wird ein der Abweichung entsprechendes digitales Signal erzeugt und dem Register 35 zugeführt. Das Register 35 schaltet je nach Abweichung zusätzliche Kondensatoren zwischen den Klemmen B und C zu oder ab, und zwar derart, daß die Resonanzfrequenz des Bandfilters 4 auf ihren richtigen Wert eingestellt wird.

Der Umschalter 31 arbeitet also bei NTSC, PAL und SECAM unterschiedlich. Bei NTSC-Betrieb nimmt er nur die Stellungen a und b ein, weil die SECAM-Demodulatoren nicht benötigt werden. Bei PAL-Betrieb gilt das gleiche. Bei SECAM-Betrieb nimmt der Umschalter 31 sequentiell alle Stellungen a, b, c, d ein, weil dann alle vier Oszillatoren 34, VCO1, VCO2 und VCO3 wirksam sind.

Die Register 35, 32, 41, 40 sind mit ihren Eingängen parallelgeschaltet und werden entsprechend dem durch den Umschalter 31 festgelegten Meßzyklus sequentiell von der Regelschaltung 30 mit digitalen Signalen angesteuert. Zu diesem Zweck sind die Register 35, 32, 41, 40 von Halbbild zu Halbbild zeitlich nacheinander jeweils für die Dauer der Vertikalaustastzeit der Regelschaltung 30 über die Steuerleitungen C1, C2, C3, C4 wirksam gesteuert. Wenn z. B. die Regelschaltung 30 das digitale Signal zur Frequenzregelung des Oszillators CVO3 liefert, ist über die Leitung C2 nur das Register 32 aktiviert, während die Register 35, 41, 40 über die Leitungen C1, C3, C4 unwirksam gesteuert sind.

Farbtoneinstellung bei NTSC

Bei NTSC-Betrieb ist eine Phasenregelung des Farbträgers mit dem Phasendreher 6 nicht erforderlich, weil die Stufen 7, 8 nur einen Farbträger erhalten und die Einstellung einer Phasenbeziehung zwischen zwei zugeführten Farbträgern somit nicht notwendig ist. Der Phasendreher 6 wird bei NTSC-Betrieb zur manuellen Einstellung des Farbtones ausgenutzt. Zu diesem Zweck gelangt von der Anschlußklemme Z eine extern manuell einstellbare Steuerspannung auf den Phasendreher 6, mit der dessen Phasendrehung einstellbar ist. Der Phasendreher 6 ist durch die zugeführten Spannungen N und BG so gesteuert, daß die Änderung der Phasendrehung nur während der Dauer des Farbsynchronsignals erfolgt und die Phase des modulierten Farbträgers während der Zeilenhinlaufzeit unverändert bleibt. Bei Änderung der Phasendrehung des Phasendrehers 6 während der Zeilenrücklaufzeit ändert sich die Phase des Farbsynchronsignals am Eingang der Phasenvergleichsstufe 14 und damit die Phase des im Oszillator VCO3 erzeugten Referenzträgers. Da dann die Synchrondemodulatoren nach einer anderen Demodulationsachse erfolgt, ändert sich in erwünschter Weise der Farbton im wiedergegebenen Bild. Es ist auch möglich, bei der Farbtoneinstellung die Phase des Farbsynchronsignals unverändert zu lassen und die Phase des modulierten Farbträgers während der Zeilenhinlaufzeit zu ändern. Die erstgenannte Lösung mit Änderung der Phase des Farbsynchronsignals hat jedoch den Vorteil, daß die Phasenänderung nur für das Farbsynchronsignal und nicht für den modulierten Farbträger während der Zeilenhinlaufzeit erforderlich ist. Das ist vorteilhaft, weil Störungen bei der Änderung der Phasendrehung sich unmittelbar auf den modulierten Farbträger auswirken können, im Regelweg des Oszillators VCO3 jedoch wegen der hohen Zeitkonstante unterdrückt werden.

Für die Normenumschaltung ist die Suchschaltung 44 vorgesehen. Die Suchschaltung 44 wird von dem FP-Impuls betätigt und schaltet nacheinander jeweils für die Dauer von etwa 6-8 vollständigen Bildern über die Ausgänge A, N, N' und F die gesamte Schaltung auf die einzelnen Betriebsarten, nämlich Amplitudenmodulation für NTSC und PAL (A), NTSC mit 4,43 MHz (N), NTSC mit 3,58 MHz (N') und SECAM (F) mit den dargestellten Schaltern um. Gleichzeitig fragt die Suchschaltung 44 die Ausgänge der Identifikationsschaltung 19 ab, ob ein Signal mit der Norm der jeweils eingestellten Betriebsart empfangen wird. Sobald die Identifikationsschaltung 19 die Anwesenheit eines Signales der jeweils eingestellten Betriebsart anzeigt, wird die Suchschaltung 44 angehalten und rastet in dieser Stellung ein, so daß jetzt das Signal der jeweiligen Norm empfangen werden kann. Es sei angenommen, daß ein NTSC-Signal mit 3,58 MHz an der Eingangsklemme B liegt, die Suchschaltung 44 zunächst in der Stellung A steht und den Ausgang P der Identifikationsschaltung 19 abfragt. Da kein PAL-Signal empfangen wird, liefert die Identifikationsschaltung 19 am Ausgang P den logischen Wert « 0 ». Die Suchschaltung 44 schaltet daraufhin in die Betriebsart N = NTSC mit 4,43 MHz um und fragt den Ausgang N4 der Identifikationsschaltung 19 ab. Da dieses Signal ebenfalls nicht empfangen wird, steht am Ausgang N4 der Spannungswert « 0 », und die Suchschaltung 44 schaltet in die Betriebsart N' um und fragt den Ausgang N3 der Identifikationsschaltung 19 ab. Dabei ist außerdem der Schalter N' geschlossen, damit das Bandfilter 4 mit dem Kondensator 5 auf die Frequenz von 3,58 MHz abgestimmt ist. Die Identifikationsschaltung 19 stellt jetzt ein Signal der eingestellten Betriebsart, nämlich das NTSC-Signal mit 3,58 MHz fest und liefert an den Ausgang N3 den logischen Spannungswert « 1 ». Die Suchschaltung 44 erkennt jetzt, daß in der eingestellten Betriebsart ein Signal der zugeordneten Norm empfangen wird und rastet in dieser Stellung ein. Das empfangene NTSC-Signal mit 3,58 MHz kann jetzt von der integrierten Schaltung 1 verarbeitet werden. Wenn überhaupt kein von der Schaltung 1 erkennbares Signal empfangen wird, läuft die Suchschaltung 44 zyklisch ständig weiter und fragt solange ab, bis wieder ein von der Schaltung 1 erkennbares Signal erkannt wird.

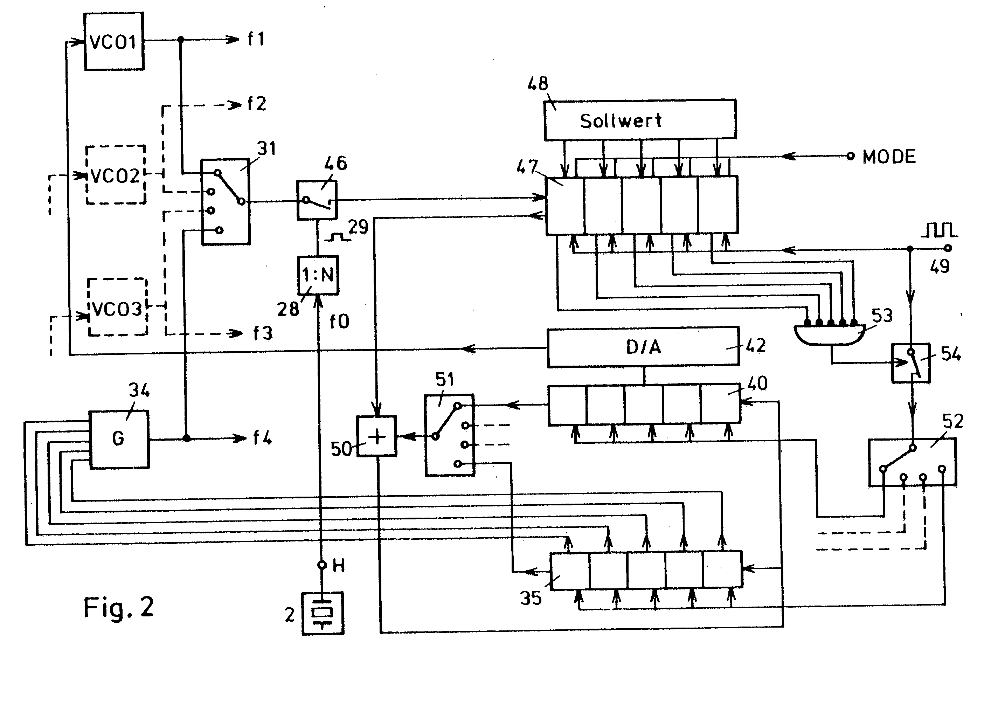

Anhand der Fig. 2 wird die Wirkungsweise der in Fig. 1 angedeuteten Frequenzregelung des Oszillators VCO sowie des Oszillators 34 näher beschrieben. Dabei sind Bauteile, die bereits in Fig. 1 enthalten sind, mit gleichen Bezugsziffern versehen. Die vom Oszillator VCO1 erzeugte Frequenz f1 wird während einer definierten Referenzzeit gemessen. Dazu wird aus der Referenzfrequenz fo von 62,5 kHz mit Hilfe des Zählers 28 der Meßimpuls 29 erzeugt, der das Tor 46 durchlässig steuert. Die vom Oszillator VCO1 erzeugte Frequenz f1 wird über den zyklisch betätigten Umschalter 31 an den Eingang des digitalen Komparators 47 gelegt. Über ein Steuersignal am « MODE »-Eingang des Komparators 47 arbeitet dieser wechselweise als Schieberegister und als vergleichender Zähler, der die eingelesenen Werte vom Tor 46 mit einem vom Sollwertgeber 48 vorgegebenen Wert vergleicht. Zum Ein- und Auslesen des Komparators 47 dienen die Schiebeimpulse 49. Bei der Frequenzregelung wird im Regelfall zunächst eine Abweichung zwischen Istwert und Sollwert als Differenz festgestellt. Die dieser Differenz entsprechende Spannung wird in der Addierstufe 50 zu dem in dem Register 40 gespeicherten, aus einer vorangehenden Messung gewonnenen Wert addiert, der von dem Register 40 über den zyklisch umlaufenden Umschalter 51 an die Addierstufe 50 gelangt.

Es sei angenommen, daß dieser zunächst den Wert « 0 » besitzt. Das Ergebnis aus der Addierstufe 50 gelangt an das über den zyklischen Umschalter 52 getaktete Register 40. Aus den im Register 40 stehenden digitalen Wert wird mit Hilfe des D/A-Wandlers 42 eine analoge Regelspannung gebildet, die zur Regelung der Frequenz auf den Oszillator VCO1 gelangt. Dadurch stellt sich eine neue Ausgangsfrequenz f1 ein, die wieder in den digitalen Komparator 47 gelangt und dort mit dem Sollwert vom Sollwertgeber 48 verglichen wird. Es stellt sich ein neuer, kleinerer Differenzwert ein, der zu dem im Register 40 aus der vorangegangenen Messung gewonnenen Wert in der Addierstufe 50 addiert und wieder in das Register 40 eingeschrieben wird. Danach wird wieder über den D/A-Wandler 42 eine neue Regelspannung für den Oszillator VCO1 gewonnen. Diese Vorgänge wiederholen sich solange, bis der Differenzwert « 0 » geworden ist. Dann wird in der Addierstufe 50 nichts mehr addiert, und der Wert im Register 40 sowie die vom D/A-Wandler 42 gelieferte analoge Regelspannung nehmen jetzt einen stabilen Zustand ein, bei dem die Frequenz f1 ihren Sollwert aufweist. Wenn der Komparator 47 den Differenzwert « 0 » feststellt, d. h. wenn sämtliche Ausgänge des Komparators 47 den Zustand « 0 » annehmen, wird über den Detektor 53 der Schalter 54 geöffnet, so daß keine weiteren Schiebeimpulse 49 an das Register 40 gelangen können.

Der beschriebene Vorgang kann auch beliebig viele Oszillatoren zur Erzeugung mehrerer stabiler Frequenzen f1-f4 angewendet werden, wie durch die zusätzlich dargestellten Oszillatoren VCO2, VCO3, 34 und das Register 35 angedeutet ist. Resonanzfrequenz des Bandfilters 4 und damit Frequenz des Oszillators 34 werden in der anhand der Fig. 1 beschriebenen Weise vom Register 35 durch Zu- und Abschalten von Kondensatoren mittels digitaler Signale gesteuert.

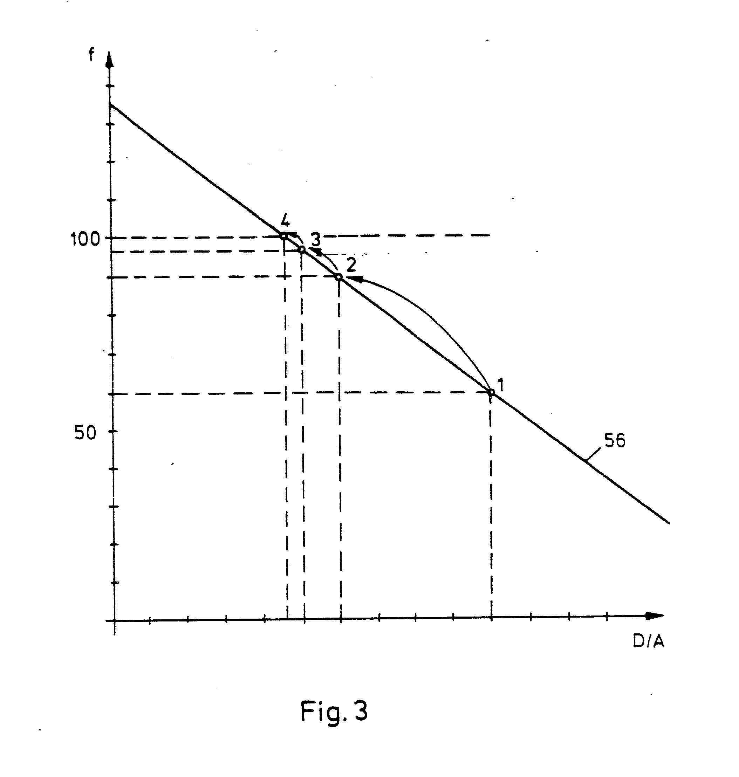

In Fig. 3 ist der Ablauf des Regelvorganges an einem Diagramm dargestellt. Das Diagramm zeigt die Funktion der gemessenen Oszillatorfrequenz f in Abhängigkeit von dem im Register stehenden Wert und damit der stauernden Regelspannung. Auf der Ordinate ist der Sollwert der Frequenz f mit « 100 » eingetragen.

Die Funktion ist durch die Kurve 56 dargestellt. Es sei angenommen, daß der vom D/A-Wandler erzeugte Spannungswert den Oszillator auf eine Frequenz einstellt, die den Meßwert « 60 » erzeugt, der vom Sollwert « 100 » um den Wert — 40 abweicht. Der Wert des Registers wird durch die Addierstufe 50 um diese Abweichung vermindert. Aus der Funktion gibt sich ein neuer Frequenzwert von « 90 ». Die neue Differenz beträgt nunmehr — 10. Daraufhin stellt sich nach nochmaligem Regelvorgang der Wert « 99 » ein. Es ist ersichtlich, daß sich die Oszillatorfrequenz f stufenweise auf den Sollwert stätig einpendelt. Die einzelnen eingeregelten Punkte sind durch die Ziffern 1, 2, 3, 4 dargestellt, wobei die Ziffer 1 den Ausgangswert der Frequenz f und die Ziffer 4 den endgültigen Sollwert der Frequenz f darstellt.

Die gleichzeitige Anwendung der beschriebenen, in der integrierten Schaltung 1 enthaltenen Regelschaltungen ist besonders in einer integrierten Schaltung vorteilhaft, weil die Zahl der Bauteile innerhalb einer integrierten Schaltung die Kosten der Schaltung nicht nennenswert beeinflußt. Die beschriebenen Schaltungen sind jedoch auch einzeln für sich in konventioneller Schaltungstechnik zur Lösung der beschriebenen Aufgaben anwendbar.

**Patentansprüche**

1. Integrierte Schaltung für den Farbdekoder eines PAL-Farbfernsehempfängers mit einer Addierstufe (7) und einer Subtrahierstufe (8) für die Farbträger aus zwei zeitlich aufeinanderfolgenden Zeilen und mit einem zur Demodulation des Farbträgers dienenden Oszillator (VCO), dadurch gekennzeichnet, daß in der integrierten Schaltung (1) die der Addierstufe (7) und der Subtrahierstufe (8) entnommenen Farbsynchronsignale auswertende Regelschaltungen (17, 39 ; 18, 6) für den Amplitudenabgleich und den Phasenabgleich der der Addierstufe (7) und der Subtrahierstufe (8) zugeführten Farbträger (F) vorgesehen sind und die integrierte Schaltung (1) eine digitale Frequenzregelschaltung (30) zur Frequenzbestimmung des Oszillators (VCO) enthält, die mit einer Anschlußklemme (H) zum Anlegen einer externen Referenzfrequenzspannungsquelle (2) verbunden ist.

2. Schaltung nach Anspruch 1, dadurch gekennzeichnet, daß für den Amplitudenabgleich durch Phasenvergleich (17) der Farbsynchronsignale an den Ausgängen der Addierstufe (7) und der Subtrahierstufe (8) eine Regelspannung zur Regelung der Verstärkung (Stufe 39) des unverzögerten oder verzögerten Farbträgers (F) gewonnen ist.

3. Schaltung nach Anspruch 1, dadurch gekennzeichnet, daß für den Amplitudenabgleich bei SECAM-Betrieb die SECAM-Farbträger zeitlich aufeinanderfolgender Zeilen an lie Eingänge einer Phasenvergleichstufe (17) angelegt sind, deren während der Dauer der unmodulierten SECAM-Farbträgerschwingungen zu Beginn jeder Zeile auftretende Ausgangsspannung zur Regelung der Verstärkung des unverzögerten oder verzögerten SECAM-Farbträgers ausgenutzt ist.

4. Schaltung nach Anspruch 1, dadurch gekennzeichnet, daß für den Phasenabgleich durch Auswertung der Phase des am Ausgang der Addierstufe (7) oder der Subtrahierstufe (8) stehenden Farbsynchronsignals relativ zu einer festen Modulationsachse (V) eine Regelspannung zur Regelung der Phasendrehung eines im Weg des unverzögerten oder des verzögerten Farbträgers liegenden Phasendrehers (6) gewonnen ist.

5. Schaltung nach Anspruch 4, dadurch gekennzeichnet, daß der Phasendreher (6) bei NTSC-Betrieb (N) zur manuellen Einstellung des Farbtons ausgenutzt ist.

6. Schaltung nach Anspruch 5, dadurch gekennzeichnet, daß an eine Steuerklemme des Phasendrehers (6) eine an einer Anschlußklemme (Z) der Schaltung (1) stehende, extern einstellbare Spannung angelegt ist.

7. Schaltung nach Anspruch 5, dadurch gekennzeichnet, daß die Änderung der Phasendrehung des Phasendrehers (6) zur Einstellung des Farbtons nur während der Dauer des Farbsynchronsignals oder nur während der Zeilenhinlaufzeit wirksam ist.

8. Schaltung nach Anspruch 1, dadurch gekennzeichnet, daß der PAL-und/oder ein NTSC-Bezugsträgeroszillator (VCO3) sowohl von der Frequenzregelschaltung (30) als auch von dem Farbsynchronsignal über eine PLL-Schaltung (14-16) synchronisiert ist.

9. Schaltung nach Anspruch 1, dadurch gekennzeichnet, daß aus der Referenzfrequenzspannung ein Meßimpuls (29) definierter Dauer erzeugt wird und die jeweilige Frequenzmessung in der Frequenzregelschaltung (30) durch Zählen der Periodenzahl der jeweils zu messenden Spannung während der Dauer des Meßimpulses (29) erfolgt.

10. Schaltung nach Anspruch 1, dadurch gekennzeichnet, daß die Messung der Frequenzen mehrerer Oszillatoren (VCO1, VCO2, VCO3, 34) zyklisch nacheinander erefolgt, indem ein Eingang der Frequenzregelschaltung (30) mit einem Umschalter (31) zyklisch nacheinander zwischen den Ausgängen der Oszillatoren umgeschaltet wird.

11. Schaltung nach Anspruch 1, dadurch gekennzeichnet, daß der Ausgang der Frequenzregelscheltung (30) für mehieie Synchronisierfunktionen zyklisch nacheinander getrennte Register (32, 41, 40) speist, deren Ausgänge über D/A-Wandler (33, 43, 42) Regelspannungen für die Synchronisierfunktionen erzeugen.

12. Schaltung nach Anspruch 11, dadurch gekennzeichnet, daß der Ausgang der Frequenzregelschaltung (30) parallel mit den Eingägen der Register (35, 32, 41, 40) verbunden ist und die Register zyklisch nacheinander aktiviert werden.

13. Schaltung nach Anspruch 10, 11 oder 12, dadurch gekennzeichnet, daß die zyklische Umschaltung von Halbbild zu Halbbild und die Messung bzw. Aktivierung während der Vertikalaustastzeit erfolgt.

14. Schaltung nach Anspruch 1, dadurch gekennzeichnet, daß an den Eingang dei Frequenziegelschaltung (30) ein interner Oszillator (34) angeschlossen und so geschaltet ist, daß seine Frequenz von der Resonanzfrequenz eines externen Schwingkreises (4) abhängt und daß durch Messung der Oszillatorfrequenz eine Stellgröße gewonnen wird, die dem Schwingkreis (4) interne Reaktanzen derart hinzuschaltet, daß der Schwingkreis (4) die Soll-Resonanzfrequenz hat.

15. Schaltung nach Anspruch 14, dadurch gekennzeichnet, daß der Schwingkreis (4) Bestandteil eines im Weg des Farbträgers (F) liegenden Bandfilters (4) ist.

16. Schaltung nach Anspruch 9, dadurch gekennzeichnet, daß die durch die Frequenzmessung gewonnene Spannung einem vom Frequenz-Sollwert gespeisten digitalen Komparator (47) zugeführt wird, der wechselweise als Schieberegister und als vergleichender Zähler arbeitet (Fig. 2).

17. Schaltung nach Anspruch 16, dadurch gekennzeichnet, daß eine in dem Komparator (47) durch Soll/Ist-Vergleich gewonnene Differenzspannung in einer Addierstufe (50) zu der in einem Register (40) gespeicherten, aus einer vorangehenden Messung gewonnene Spannung addiert wird, und das Summensignal zur Frequenzregelung dient (Fig.2).

## Claims

1. An integrated circuit for the colour decoder of a PAL colour television receiver having an adding stage (7) and a subtraction stage (8) for the chrominance carriers from two lines succeeding one another in time and having an oscillator (VCO) serving for the demodulation of the chrominance carrier, characterised in that control circuits (17,39 ; 18,6) evaluating the colour bursts taken from the adding stage (7) and the subtraction stage (8) for the amplitude adjustment and the phase adjustment of the chrominance carriers (F) supplied to the adding stage (7) and the subtraction stage (8) are provided in the integrated circuit (1) and the integrated circuit (1) contains a digital frequency control circuit (30) to determine the frequency of the oscillator (VCO), which circuit is connected to a terminal (H) for the connection of an external reference-frequency voltage source (2).

2. A circuit according to claim 1, characterised in that a control voltage for controlling the amplification (stage 39) of the undelayed or delayed chrominance carrier (F) is obtained for the amplitude adjustment by phase comparison (17) of the colour bursts at the outputs of the adding stage (7) and the subtraction stage (8).

3. A circuit according to claim 1, characterised in that for the amplitude adjustment during SECAM operation, the SECAM chrominance carriers of lines succeeding one another in time are applied to the inputs of a phase comparison stage (17) of which the output voltage appearing during the period of the unmodulated SECAM chrominance-carrier oscillations at the beginning of each line is used to control the amplification of the undelayed or delayed SECAM chrominance carrier.

4. A circuit according to claim 1, characterised in that a control voltage to control the phase shift of a phase shifter (6) lying in the path of the undelayed or delayed chrominance carrier is obtained for the phase adjustment by evaluation of the phase of the colour burst appearing at the output of the adding stage (7) or the subtraction stage (8) in relation to a fixed modulation axis (V).

5. A circuit according to claim 4, characterised in that the phase shifter (6) is utilized during NTSC operation (N) for the manual adjustment of the hue.

6. A circuit according to claim 5, characterised in that an externally adjustable voltage appearing at a terminal (Z) of the circuit (1) is applied to a control terminal of the phase shifter (6).

7. A circuit according to claim 5, characterised in that the variation in the phase shift of the phase shifter (6) to adjust the hue is effective only during the period of the colour burst or only during the line trace interval.

8. A circuit according to claim 1, characterised in that the PAL oscillator and/or an NTSC reference-carrier oscillator (VCO3) is synchronized both by the frequency control circuit (30) and by the colour burst through a PLL circuit (14-16).

9. A circuit according to claim 1, characterised in that a measuring pulse (29) of defined duration is produced from the reference-frequency voltage and the particular frequency measurement is effected in the frequency control circuit (30) by counting the number of cycles of the particular voltage to be measured during the period of the measuring pulse (29).

10. A circuit according to claim 1, characterised in that the measurement of the frequencies of a plurality of oscillators (VCO1, VCO2, VCO3, 34) is effected cyclically in succession, in that an input of the frequency control circuit (30) is switched over, by a change-over switch (31), cyclically in succession between the outputs of the oscillators.

11. A circuit according to claim 1, characterised in that for a plurality of synchronizing functions, the output of the frequency control circuit (30) feeds separate registers (32, 41, 40) cyclically in succession, the outputs of which registers produce control voltages for the synchronizing functions through D/A converters (33, 43, 42).

12. A circuit according to claim 11, characterised in that the output of the frequency control circuit (30) is connected in parallel with the inputs of the registers (35, 32, 41, 40) and the registers are activated cyclically in succession.

13. A circuit according to claim 10, 11 or 12, characterised in that the cyclic switching over from field to field and the measurement or activation are effected during the vertical blanking time.

14. A circuit according to claim 1, characterised in that an internal oscillator (34) is connected to the input of the frequency control circuit (30) and is wired so that its frequency depends on the resonance frequency of an external oscillatory circuit (4) and in that a correcting variable is obtained by measuring the oscillator frequency and is superimposed on the internal reactances of the oscillatory circuit (4) in such a manner that the oscillatory circuit (4) has the desired resonant frequency.

15. A circuit according to claim 14, characterised in that the oscillatory circuit (4) is part of a band-pass filter (4) lying in the path of the chrominance carrier (F).

16. A circuit according to claim 9, characterised in that the voltage obtained by the frequency measurement is fed to a digital comparator (47) which is fed with the desired frequency value and which works alternately as a shift register and as a comparative counter (Figure 2).

17. A circuit according to claim 16, characterised in that a differential voltage obtained in the comparator (47) by desired/actual comparison is added, in an adding stage (50), to the voltage stored in a register (40) and obtained from a preceding measurement and the sum signal serves for the frequency control (Figure 2).

## Revendications

1. Circuit intégré pour le décodeur couleur d'un récepteur de télévision en couleurs PAL comportant un étage additionneur (7) et un étage soustracteur (8) pour les porteuses couleur provenant de deux lignes se succédant dans le temps, et un oscillateur (VCO) servant à démoduler la porteuse couleur, caractérisé en ce que des circuits de régulation (17,39 ; 18,6), qui évaluent des signaux de synchronisation couleur prélevés de l'étage additionneur (7) et de l'étage soustracteur (8) et servent à régler l'équilibrage d'amplitude et la mise en phase des porteuses couleurs (F) envoyées à l'étage additionneur (7) et à l'étage soustracteur (8), sont prévus dans le circuit intégré (1) et que le circuit intégré (1) contient un circuit numérique de régulation de fréquence (30), qui sert à déterminer la fréquence de l'oscillateur (VCO) et est relié à une borne de raccordement (H) utilisée pour le raccordement d'une source extérieure (2) de tension possédant la fréquence de référence.

2. Circuit selon la revendication 1, caractérisé en ce que pour l'équilibrage d'amplitude, une tension de régulation servant à régler l'amplification (étage 39) de la porteuse couleur (F) retardée ou non retardée est obtenue par comparaison (17) des phases des signaux de synchronisation couleur présents sur les sorties de l'étage additionneur (7) et de l'étage soustracteur (8).

3. Circuit selon la revendication 1, caractérisé en ce que pour l'équilibrage d'amplitude dans le cas d'un fonctionnement SECAM, les porteuses couleur SECAM appartenant à des lignes se succédant dans le temps sont appliquées aux entrées d'un étage comparateur de phase (17), dont la tension de sortie, qui apparaît pendant la durée des oscillations non modulées des porteuses couleur SECAM au début de chaque ligne, est utilisée pour régler l'amplification de la porteuse couleur SECAM retardée ou non retardée.

4. Circuit selon la revendication 1, caractérisé en ce que pour la mise en phase au moyen d'une évaluation de la phase du signal de synchronisation couleur apparaissant sur la sortie de l'étage additionneur (7) ou de l'étage soustracteur (8) par rapport à un axe fixe de modulation (V), on obtient une tension de régulation servant à régler la rotation de phase d'un dispositif de rotation de phase (6) situé dans la voie de circulation de la porteuse couleur non retardée ou de la porteuse couleur retardée.

5. Circuit selon la revendication 4, caractérisé en ce que le dispositif de rotation de phase (6) est utilisé, dans le cas du fonctionnement NTSC (N), pour régler manuellement la teinte.

6. Circuit selon la revendication 5, caractérisé en ce qu'une tension présente sur une borne de raccordement (Z) du circuit (1) et réglable de l'extérieur, est appliquée à une borne de commande du dispositif de rotation de phase (6).

7. Circuit selon la revendication 5, caractérisé en ce que la variation de la rotation de phase du dispositif de rotation de phase (6) agit de manière à régler la teinte uniquement pendant la durée du signal de synchronisation couleur ou uniquement pendant le temps de parcours aller du spot.

8. Circuit selon la revendication 1, caractérisé en ce que l'oscillateur (VCO3) délivrant la porteuse de référence pour le système PAL et/ou un tel oscillateur pour le système NTSC sont synchronisés aussi bien par le circuit (30) de régulation de la fréquence que par le signal de synchronisation couleur, par l'intermédiaire d'un circuit PLL (14-16).

9. Circuit selon la revendication 1, caractérisé en ce qu'une impulsion de mesure (29) possédant une durée définie est produite à partir de la tension possédant la fréquence de référence et que la mesure respective de fréquence dans le circuit (30) de régulation de la fréquence est réalisée par comptage de la durée de la période de la tension devant être respectivement mesurée, pendant la durée de l'impulsion de mesure (29).

10. Circuit selon la revendication 1, caractérisé en ce que la mesure des fréquences de plusieurs oscillateurs (VCO1, VCO2, VCO3, 34) s'effectue successivement de façon cyclique, par le fait qu'une entrée du circuit (30) de régulation de la fréquence est commutée successivement cycliquement, au moyen d'un commutateur (31), entre les sorties des oscillateurs.

11. Circuit selon la revendication 1, caractérisé en ce que la sortie du circuit (30) de régulation de la fréquence pour plusieurs fonctions de synchronisation alimente des registres (32, 41, 40) séparés successivement de façon cyclique et dont les sorties produisent, par l'intermédiaire de convertisseurs numérique/analogique (33, 43, 42), des tensions de réglage pour les fonctions de synchronisation.

12. Circuit selon la revendication 11, caractérisé en ce que la sortie du circuit (30) de régulation de la fréquence est reliée en parallèle aux entrées des registres (35, 32, 41, 40) et que les registres sont activés successivement de façon cyclique.

13. Circuit selon la revendication 10, 11 ou 12, caractérisé en ce que la commutation cyclique s'effectue d'une trame à la suivante et que la mesure ou l'activation s'effectue pendant la période de suppression verticale.

14. Circuit selon la revendication 1, caractérisé en ce qu'un oscillateur interne (34) est raccordé à l'entrée du circuit (30) de régulation de la fréquence et est commuté de telle sorte que sa fréquence dépend de la fréquence de résonance d'un circuit oscillant externe (4), et qu'une mesure de la fréquence de l'oscillateur permet d'obtenir une grandeur de réglage qui raccorde de façon supplémentaire des réactances internes au circuit oscillant (4) de manière que le circuit oscillant (4) possède la fréquence de résonance de consigne.

15. Circuit selon la revendication 14, caractérisé en ce que le circuit oscillant (4) fait partie d'un filtre de bande (4) installé dans la voie de circulation de la porteuse couleur (F).

16. Circuit selon la revendication 9, caractérisé en ce que la tension obtenue par la mesure de la fréquence est envoyée à un comparateur numérique (47) alimenté par la valeur de consigne de la fréquence et travaillant en alternance en tant que registre et en tant que compteur exécutant une comparaison (figure 2).

17. Circuit selon la revendication 16, caractérisé en ce qu'une tension différentielle obtenue dans le comparateur 47 sous l'effet d'une comparaison valeur de consigne/valeur réelle, est ajoutée, dans un étage additionneur (50), à la tension mémorisée dans un registre (40) et obtenue à partir d'une mesure antérieure, et que le signal somme est utilisé pour régler la fréquence (figure 2).

Fig.1

Fig. 2

Fig. 3